# EUROPÄISCHE PATENTSCHRIFT

(11) **EP 1 720 747 B1**
(45) Veröffentlichungstag und Bekanntmachung des Hinweises auf die Patenterteilung: **17.03.2010**
(21) Anmeldenummer: 05716600.1
(22) Anmeldetag: 27.01.2005
(51) Int. Cl.: B60S 1/04

(54) **SCHEIBENWISCHVORRICHTUNG, INSBESONDERE FÜR EIN KRAFTFAHRZEUG**
WINDSHIELD WIPING DEVICE, ESPECIALLY FOR A MOTOR VEHICLE
DISPOSITIF ESSUIE-GLACE, EN PARTICULIER POUR UN VEHICULE AUTOMOBILE

(30) Priorität: 26.02.2004 DE 102004009303
(43) Veröffentlichungstag der Anmeldung: 15.11.2006
(73) Patentinhaber: ROBERT BOSCH GMBH, 70442 Stuttgart (DE)
(72) Erfinder: RAPP, Juergen, 77886 Lauf (DE); VOLZ, Heiko, 77855 Achern (DE); LAEMMER, Harald, 77975 Ringsheim (DE)
(86) Internationale Anmeldenummer: PCT/EP2005/050354
(87) Internationale Veröffentlichungsnummer: WO 2005/082688

(56) Entgegenhaltungen:
- EP-A- 0 916 559
- WO-A-2005/000641
- US-A- 5 142 941
- US-A1- 2003 077 012
- US-B1- 6 421 873

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreiche Scheibenwischvorrichtungen bekannt, die mehrere Teile, wie beispielsweise ein Trägerrohr umfassen, das ein Wischerlager trägt, indem eine Wischerwelle gelagert ist. Derartige Scheibenwischvorrichtungen weisen noch ein Getriebe auf, dass die Wischerwelle durch einen Antrieb in eine radiale Bewegung, insbesondere eine Pendelbewegung zu versetzen vermag.

Weiterhin sind Scheibenwischvorrichtungen bekannt, beispielsweise aus der EP-A-0 739 792, die Sollbruchstellen aufweisen, um die Scheibenwischvorrichtung beim Aufprall eines Fußgängers auf die Wischerwelle vom Kraftfahrzeug zu lösen, sodass diese in das Innere des Kraftfahrzeugs abtauchen kann. Je nach Richtung und Stärke der axialen Krafteinwirkung auf die Wischerwelle sind derartige Sollbruchstellen jedoch nicht immer optimal. Weiterhin ergeben sich Probleme, wenn der Fußgänger auf die Karosserie im Bereich der Scheibenwischvorrichtung und nicht auf die Wischerwellen direkt auftrifft.

Aus der US 2003/0077012 A ist ein Wischerlagergehäuse bekannt, an dem einerseits eine Lasche mit einer Befestigungsöse angeformt ist, um eine Scheibenwischvorrichtung an einer Karosserie eines Fahrzeugs zu befestigen. Etwa diametral zur Befestigungsöse besitzt das Wischerlagergehäuse einen Anschlussstutzen, mit dem es auf einer Haltestange des Wischersystems aufgesteckt ist. Zwischen dem Wischerlager und der Befestigungsöse sowie zwischen dem Wischerlager und dem Anschlussstutzen sind verformbare Bereiche vorgesehen, die einerseits dazu dienen, das Wischerlager gegenüber der Karosserie und der Haltestange auszurichten, und andererseits im Falle einer Kollision, insbesondere bei einem Aufprall eines Fußgängers, plastisch oder elastisch nachgeben zu können.

Aus der US 6 421 873 B1 ist ein Wischerträger, in einer Ausführung mit Hohlprofilen, auch Rohrplatine oder Rohrrahmen genannt, bekannt, der zwei an seinen Enden befestigte Wischerlager miteinander verbindet und einen dazwischen angeordneten Motorträger aufweist. Um Spitzenbelastungen abzubauen, die sich beim Blockieren der Scheibenwischer ergeben, sind im Bereich der Hohlprofile axial verformbare Bereiche vorgesehen. Im Blockierfall geben diese nach, wodurch die Spitzenbelastung reduziert wird. In einem Ausführungsbeispiel besitzt ein Hohlprofil einen elastisch axial nachgiebigen Bereich, in dem sich Abschnitte mit einem kleineren Durchmesser mit Abschnitten mit einem größeren Durchmesser abwechseln. Solche Abschnitte können durch Sicken oder durch ein Wellrohr gebildet werden.

Ferner ist in einer älteren Patentanmeldung, der WO 2005/000641 A1 eine Scheibenwischvorrichtung mit einer Rohrplatine bekannt, die zwischen ihren Wischerlagern einen Biegebereich aufweist, in dem die Biegesteifigkeit des Rohrs vermindert ist. Außerdem ist an einem Ende des Rohrs am Wischerlager ein Befestigungsteil angeordnet, das durch eine Schraube mit einer Gummimuffe als Dämpfungselement befestigt ist. Das Befestigungsteil weist zwei Schienen als Mittel zur beweglichen Befestigung an der Karosserie des Kraftfahrzeugs auf. Durch eine axiale Krafteinwirkung auf die Wischerwelle wird das Befestigungsteil in der Führung nach unten geschoben und teilweise aus der Führung gelöst. Hierbei wird der Biegebereich der Rohrplatine beansprucht.

Aufgabe der Erfindung ist es daher, mit einfachen Mitteln eine Scheibenwischvorrichtung bereitzustellen, welche einen optimalen Schutz für einen auf die Karosserie im Bereich der Scheibenwischvorrichtung auftreffenden Fußgänger bietet.

### Vorteile der Erfindung

Die erfindungsgemäße Scheibenwischvorrichtung mit den Merkmalen des Hauptanspruchs hat den Vorteil, dass ein Deformationselement am Trägerrohr vorgesehen ist, dass durch Einwirkung einer axialen Kraft auf eines der Teile der Scheibenwischvorrichtung deformierbar ist. Auf diese Weise ist sichergestellt, dass ein Fußgänger auch dann optimal geschützt ist, wenn dieser nicht direkt auf die Wischerwelle der Scheibenwischvorrichtung auftrifft. Weiterhin ist eine derartige Lösung kostengünstig und überaus einfach in der Fertigung.

Durch die in den Unteransprüchen aufgeführten Maßnahmen ergeben sich vorteilhafte Weiterbildungen und Verbesserungen der im Hauptanspruch angegebenen Merkmale.

Weiterhin ist es als vorteilhaft anzusehen, wenn das Trägerrohr mehrere Rohrteile umfasst und das Deformationselement eines dieser Rohrteile ist.

Hierbei ist es besonders vorteilhaft, wenn das Deformationselement des Trägerrohrs als Verbindungsstück zwischen Wischerlager und einem weiteren Rohrteil des Trägerrohrs ausgebildet ist, da so auf ein weiteres Verbindungsstück zwischen Wischerlager und Trägerrohr verzichtet werden kann.

Ein besonders guter Schutz für einen aufprallenden Fußgänger wird dadurch erzielt, dass das Wischerlager an einer Fahrzeugkarosserie befestigbar ist und ein weiteres Deformationselement vorgesehen ist, das in der Verbindung zwischen Wischerlager und Fahrzeugkarosserie angeordnet ist.

Ist das Deformationselement durch Einwirkung einer definierten axialen Kraft auf die Wischerwelle deformierbar, so ergibt sich ein besonders guter Schutz für einen Fußgänger, der auf die, aus der Karosserie herausragenden Wischerwellen auftrifft.

Nimmt das Deformationselement bei der Deformation kontinuierlich Energie auf, so wird die Energie aus dem Aufprall in das Deformationselement anstatt in den aufprallenden Fußgänger geleitet, wodurch dieser noch besser geschützt ist.

Weiterhin ist es als vorteilhaft anzusehen, wenn das Deformationselement bei Einwirkung einer weiteren definierten, insbesondere größeren axialen Kraft bricht.

### Zeichnungen

Verschiedene Ausführungsbeispiele der Erfindung sind in den Zeichnungen dargestellt und in der nachfolgenden Beschreibung näher erläutert. Es zeigen:
- Figur 1: eine erfindungsgemäße Scheibenwischvorrichtung in einer perspektivischen Darstellung,
- Figur 2: ein Wischerlager sowie einen Ausschnitt eines Trägerrohrs einer erfindungsgemäßen Scheibenwischvorrichtung im Detail,
- Figur 3: eine erfindungsgemäße Scheibenwischvorrichtung in einer perspektivischen Darstellung in einer Variation aus Figur 1.

### Beschreibung der Ausführungsbeispiele

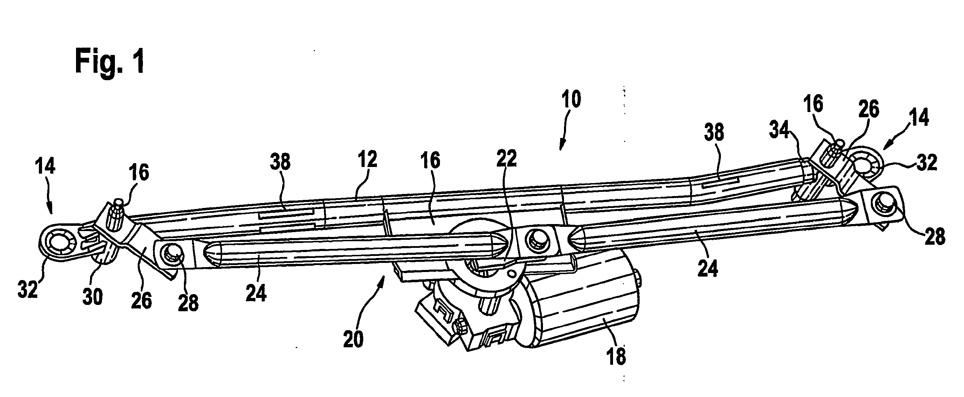

Figur 1 zeigt eine erfindungsgemäße Scheibenwischvorrichtung 10 in einer perspektivischen Darstellung.

Die Scheibenwischvorrichtung 10 umfasst mehrere Teile 12, 14, 16, 18, 20, insbesondere das Trägerohr 12 an dessen Enden jeweils ein Wischerlager 14 befestigt ist. Im Wischerlager 14 ist jeweils eine Wischerwelle 16 gelagert. Durch einen Antrieb 18 sind diese, mittels eines Getriebes 20, in eine Hin- und Herbewegung versetzbar. Das Getriebe 20 umfasst eine Abtriebskurbel 22, die durch den Antrieb 18 in eine Hin- und Herbewegung oder in eine umlaufende Bewegung versetzt werden kann. An dieser Abtriebskurbel 22 sind zwei Schubstangen 24 angelenkt, die an ihren, der Antriebskurbel 22 abgewandten Enden, jeweils eine Antriebskurbel 26 in eine pendelnde Bewegung zu versetzen vermögen. Hierzu sind die Schubstangen 24 über ein Kugelgelenk 28 mit der Antriebskurbel 26 verbunden. Die Antriebskurbel 26 wiederum ist drehfest mit der Wischerwelle 16 verbunden, so dass diese im Betrieb eine Hin- und Herbewegung vollführt.

Das Wischerlager 14 umfasst im Wesentlichen ein Formrohr 30, indem die Wischerwelle 16 gelagert ist. Einstückig mit dem Formrohr 30 ist ein Befestigungsabschnitt 32 an das Formrohr 30 angeformt, der zur Befestigung der Scheibenwischvorrichtung 10 an der Karosserie des Kraftfahrzeugs dient. Zur Befestigung am Trägerrohr 12 weist das Wischerlager 14 einen im wesentlichen stabförmigen Befestigungsstutzen 34 auf, der in das Innere des Trägerrohrs 12 eingeschoben und mit diesem vercrimpt ist.

In einer Variation kann das Trägerrohr 12 natürlich auch nicht hohl, sondern auf Vollmaterial bestehen und auch einstückig mit den Wischerlagern 14 ausgebildet sein. In einer weiteren Variation können die Befestigungsabschnitt 32 auch am Trägerrohr 12 angeordnet sein.

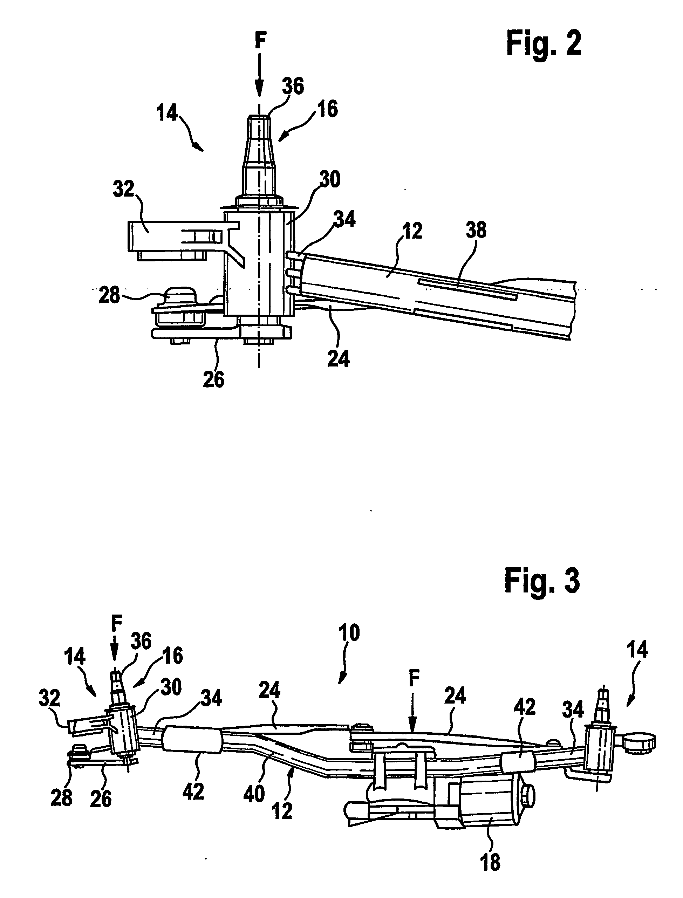

In Figur 2 ist ein Wischerlager 14 sowie in Abschnitt eines Trägerrohrs 12 einer erfindungsgemäßen Scheibenwischvorrichtung 10 dargestellt. Formrohr 30, Befestigungsabschnitt 32 und Befestigungsstutzen 34 sind einstückig aus Kunststoff in einem Spritzgassverfahren gegossen. Im Formrohr 30 ist die Wischerwelle 16 gelagert, an dessen freien Ende 36 ein Wischerarm mit einem Wischblatt befestigt werden kann, die hier aus Gründen der Übersichtlichkeit nicht gezeichnet sind. Das freie Ende 36 der Wischerwelle 16 ragt in montierter Position aus der Karosserie des Kraftfahrzeugs heraus.

Das Trägerohr 12 ist aus Metall ausgebildet und im Querschnitt Innen hohl. In seiner Wandung sind mehrere Aussparungen 38 vorgesehen, die als Deformationselemente dienen. Die Aussparungen 38 sind von länglicher Gestalt, zwischen 1 und 5 cm lang. In ihrer Längserstreckung sind die Aussparungen 38 parallel zur Längserstreckung des Trägerrohrs 12 angeordnet. Die Breite der Aussparung 38 beträgt etwa 0,5 bis 5 mm. Hier sind vier Aussparungen 38 vorgesehen, die sternförmig, jeweils im Winkel von 90° versetzt in der Wandung des Trägerrohrs 12 angeordnet sind. Auf diese Weise wird ein verringerter Widerstandsquerschnitt des Trägerrohrs erreicht, so dass beim Aufprall eines Fussgängers auf das freie Ende 36 der Wischerwelle das Trägerrohr 12 unter Energieaufnahme deformiert wird. In einer Variation könnnen natürlich auch nur 2, 3 oder mehr Aussparungen 38 vorgesehen sein, die entsprechend gleichmäßig auf den Umfang des Trägerrohrs 12 verteilt sein könnnen.

In Figur 3 ist eine erfindungsgemäße Scheibenwischvorrichtung 10 in einer Variation dargestellt. Die Bezugszeichen aus Figur 1 wurden für gleiche Teile entsprechend wieder verwendet. Hier sollen nur die zu Figur 1 unterschiedlichen Abschnitte erläutert werden. Die übrigen sind entsprechend identisch ausgebildet.

Das Trägerrohr 12 ist hier mehrteilig ausgebildet, und weist ein erstes Rohrteil 40 auf, an dem der Antrieb 18 befestigt ist. Weiterhin umfasst das Trägerohr 12 als weiteres Rohrteil das Deformationselement 42, welches von länglicher Gestalt und ebenfalls rohrförmig ausgebildet ist. An einem Ende seiner Längserstreckung umschließt es das erste Rohrteil 40 und ist auf dieses aufgecrimpt. Am anderen Ende seiner Längserstreckung ist das Deformationselement 42 mit dem Befestigungsstutzen 34 des Wischerlagers 14 vercrimpt. Die Wandungsstärke des rohrförmigen Deformationselementes 42 ist etwas geringer gewählt, als die Wandungsstärke des ersten Rohrteils 40.

Wirkt nun eine definierte im Wesentlichen axiale Kraft auf das freie Ende 36 der Wischerwelle 16 oder auf das Getriebe 20 bzw. den Antrieb 18 der Scheibenwischvorrichtung, so vermag sich das Deformationselement 42 zu verbiegen, so dass die Wischerwelle 16 bzw. das Getriebe 20 und der Antrieb 18 unter Energieaufnahme zurückweichen können.

Die Länge des Deformationselementes beträgt zwischen 1,5 und 10 cm. In einer Variation der Erfindung kann das Deformationselement auch die gleiche Wandungsstärke das erste Rohrteil 40 aufweisen und dafür aus einem weniger zähen Material bestehen. Insbesondere kann das Deformationselement 42 auch aus einem Kunststoff bestehen, der über das erste Rohrteil 40 aufgeschrumpft, aufgecrimpt oder in anderer Weise kraft- und/oder formschlüssig mit dem ersten Rohrteil 40 verbunden wurde. Natürlich sind auch beliebige Kombinationen der oben angegebenen Merkmale möglich solange sie im Rahmen der Erfindung gemäß den Ansprüchen liegen.

## Patentansprüche

1. Scheibenwischvorrichtung (10), insbesondere für ein Kraftfahrzeug, mit mehreren Teilen (12, 14, 16, 18, 20), wie einem Trägerrohr (12), das zumindest ein Wischerlager (14) trägt, in dem zumindest eine Wischerwelle (16) gelagert ist, sowie mit mindestens einem Getriebe (20), das die Wischerwelle (16) durch einen Antrieb (18) in eine radiale Bewegung zu versetzen vermag, wobei mindestens ein Deformationselement (38,42) am Trägerrohr (12) vorgesehen ist, das durch Einwirkung einer definierten axialen Kraft (F) auf eines der Teile (12, 14, 16, 18, 20) der Scheibenwischvorrichtung (10) deformierbar ist, **dadurch gekennzeichnet, dass** das Deformationselement (38, 42) als axiale Aussparung im Trägerrohr (12) ausgebildet ist.

2. Scheibenwischvorrichtung (10) nach Anspruch 1, **dadurch gekennzeichnet, dass** die Aussparungen (38) in der Wandung des Trägerrohrs (12) von länglicher Gestalt, ein bis fünf cm lang in Längsrichtung des Trägerrohrs (12) angeordnet sind.

3. Scheibenwischvorrichtung (10) nach einem der Ansprüche 1 oder 2, **dadurch gekennzeichnet, dass** die Breite der Aussparungen (38) 0,5 bis 5 mm beträgt.

4. Scheibenwischvorrichtung (10) nach einem der vorhergehenden Ansprüche, **dadurch gekennzeichnet, dass** die Aussparungen (38) sternförmig versetzt zueinander in der Wandung des Trägerrohrs (12) angeordnet sind.

5. Scheibenwischvorrichtung (10) nach einem der vorhergehenden Ansprüche, **dadurch gekennzeichnet, dass** das Deformationselement (42) des Trägerrohrs (12), als Verbindungsstück in Form eines weiteren Rohrteils zwischen dem Wischerlager (14) und einem weiteren Rohrteil (40) des Trägerrohrs (12) ausgebildet ist, an dem der Antrieb (18) befestigt ist.

6. Scheibenwischvorrichtung (10) nach einem der vorhergehenden Ansprüche, **dadurch gekennzeichnet, dass** das Wischerlager (14) an einer Fahrzeugkarosserie befestigbar ist und ein weiteres Deformationselement (38, 42) vorgesehen ist, das in der Verbindung zwischen Wischerlager (14) und Fahrzeugkarosserie angeordnet ist.

7. Scheibenwischvorrichtung (10) nach einem der vorhergehenden Ansprüche, **dadurch gekennzeichnet, dass** das Deformationselement (38, 42) durch Einwirkung einer ersten definierten axialen Kraft (F) auf die Wischerwelle (16) deformierbar ist und bei Einwirkung einer zweiten definierten, größeren axialen Kraft (F2) bricht.

## Claims

1. Windscreen wiping device (10), in particular for a motor vehicle, having a plurality of parts (12, 14, 16, 18, 20) such as a support tube (12) which supports at least one wiper bearing (14) in which at least one wiper shaft (16) is mounted, and also having at least one mechanism (20) which can set the wiper shaft (16) in radial motion by means of a drive (18), with at least one deformation element (38, 42) being provided on the support tube (12), which deformation element (38, 42) can be deformed under the action of a defined axial force (F) on one of the parts (12, 14, 16, 18, 20) of the windscreen wiping device (10), **characterized in that** the deformation element (38, 42) is formed as an axial cutout in the support tube (12).

2. Windscreen wiping device (10) according to Claim 1, **characterized in that** the cutouts (38) in the wall of the support tube (12) are arranged so as to be of elongate design, one to five cm in length, in the longitudinal direction of the support tube (12).

3. Windscreen wiping device (10) according to one of Claims 1 or 2, **characterized in that** the width of the cutouts (38) is 0.5 to 5 mm.

4. Windscreen wiping device (10) according to one of the preceding claims, **characterized in that** the cutouts (38) are arranged offset with respect to one another in a stellate fashion in the wall of the support tube (12).

5. Windscreen wiping device (10) according to one of the preceding claims, **characterized in that** the deformation element (42) of the support tube (12) is designed as a connecting piece in the form of a further tube part between the wiper bearing (14) and a further tube part (40), to which the drive (18) is fastened, of the support tube (12).

6. Windscreen wiping device (10) according to one of the preceding claims, **characterized in that** the wiper bearing (14) can be fastened to a vehicle body and a further deformation element (38, 42) is provided which is arranged in the connection between the wiper bearing (14) and vehicle body.

7. Windscreen wiping device (10) according to one of the preceding claims, **characterized in that** the deformation element (38, 42) can be deformed under the action of a first defined axial force (F) on the wiper shaft (16) and breaks under the action of a second defined, higher axial force (F2).

## Revendications

1. Dispositif d'essuie-glace (10), en particulier pour un véhicule automobile, comprenant plusieurs pièces (12, 14, 16, 18, 20), comme un tube porteur (12), qui porte au moins un palier d'essuie-glace (14), dans lequel au moins un arbre d'essuie-glace (16) est monté, ainsi qu'au moins une transmission (20), qui permet de mettre en mouvement radial l'arbre d'essuie-glace (16) par un entraînement (18), au moins un élément de déformation (38, 42) étant prévu sur le tube porteur (12), lequel peut être déformé par l'application d'une force axiale définie (F) sur l'une des pièces (12, 14, 16, 18, 20) du dispositif d'essuie-glace (10), **caractérisé en ce que** l'élément de déformation (38, 42) est réalisé sous forme d'évidement axial dans le tube porteur (12).

2. Dispositif d'essuie-glace (10) selon la revendication 1, **caractérisé en ce que** les évidements (38) sont disposés dans la paroi du tube porteur (12) de configuration allongée, sur un à cinq cm de long dans la direction longitudinale du tube porteur (12).

3. Dispositif d'essuie-glace (10) selon l'une quelconque des revendications 1 ou 2, **caractérisé en ce que** la largeur des évidements (38) vaut 0,5 à 5 mm.

4. Dispositif d'essuie-glace (10) selon l'une quelconque des revendications précédentes, **caractérisé en ce que** les évidements (38) sont disposés en forme d'étoile et sont décalés les uns par rapport aux autres dans la paroi du tube porteur (12).

5. Dispositif d'essuie-glace (10) selon l'une quelconque des revendications précédentes, **caractérisé en ce que** l'élément de déformation (42) du tube porteur (12) est réalisé sous forme de pièce de connexion en forme de pièce tubulaire supplémentaire entre le palier d'essuie-glace (14) et une pièce tubulaire supplémentaire (40) du tube porteur (12), sur lequel est fixé l'entraînement (18).

6. Dispositif d'essuie-glace (10) selon l'une quelconque des revendications précédentes, **caractérisé en ce que** le palier d'essuie-glace (14) peut être fixé sur une carrosserie du véhicule, et un élément de déformation supplémentaire (38, 42) est prévu, lequel est disposé dans la connexion entre le palier d'essuie-glace (14) et la carrosserie du véhicule.

7. Dispositif d'essuie-glace (10) selon l'une quelconque des revendications précédentes, **caractérisé en ce que** l'élément de déformation (38, 42) peut être déformé par l'application d'une première force axiale définie (F) sur l'arbre d'essuie-glace (16) et se casse dans le cas de l'application d'une deuxième force axiale plus importante définie (F2).
